# EUROPEAN PATENT APPLICATION

(11) **EP 4 554 142 A1**
(43) Date of publication of application: **14.05.2025**
(21) Application number: 23306952.5
(22) Date of filing: 10.11.2023
(51) Int. Cl.: H04L 9/08

(54) **SECURELY GENERATING AND MULTI-PARTY SHARING OF A ROOT OF TRUST IN A CLUSTERED CRYPTOSYSTEM**

(71) Applicant: THALES DIS FRANCE SAS, 92190 Meudon (FR)
(72) Inventor: SRIVASTAVA, Himanshu Kishna, 201310 UTTAR PRADESH (IN)
(74) Representative: Lotaut, Yacine Diaw

(57) **Abstract**

Provided is a system (100) for securely generating, and multi-party sharing of, a Root of Trust (RoT) in a clustered cryptosystem (110) by way of a secure enclave (55) within each node (50). It improves cluster loading crypto command performance such as digital signing and signature verification without use of an HSM. Each node attests to a Remote Server (40), submits a join request, and receives obfuscated key splitter logic. A different Remote Server provides a deobfuscator code to the node. Nodes share attestation information amongst themselves for joining the cluster (110). A primary node generates the RoT and splits it into partitions, which are then shared with other nodes. Each node thereafter regenerates the same RoT. Communications between secure enclaves are secured over a TLS channel. Other embodiments are disclosed.

## Description

### TECHNICAL FIELD

The present invention relates generally to cryptographic software, and more particularly, to use of a secure enclave for generating and sharing keys across nodes of a clustered cryptosystem.

### BACKGROUND

Most modern computing devices often have a special hardware chip dedicated to storing critically important cryptographic information like encryption keys and hashes. In computers, this is a Trusted Platform Module (TPM), while in mobile devices it's called a Secure Enclave. It is a high secure area within a larger secured system used to identify highly sensitive information. Accordingly, a secure enclave requires advanced security controls and cryptographic components to protect the data and control access.

The TPM is frequently uses as a basis for a hardware Root of Trust (RoT). This is a chain of trust needed to ensure computers and mobile device boot with legitimate verifiable code. The TPM ensures that a computer loads only trusted software during the system boot process. It verifies the integrity of the system's firmware, boot-up process, and other critical components. The RoT is a source that can always be trusted within a cryptographic system. It safeguards the security of data and applications and helps to build trust in the overall ecosystem. The RoT is used to encrypt other encryption keys, which in turn are used to encrypt and decrypt data and perform functions such as generating digital signatures and verifying signatures.

RoT schemes are also often found in a Hardware Security Module (HSM). An HSM is a dedicated crypto processing unit specifically designed for the hardware protection of the cryptographic key lifecycle. HSMs are fully contained and complete solutions for cryptographic processing, key generation, and key storage. They act as trust anchors to protect the crypto infrastructure of security-conscious organizations by securely managing, processing, and storing cryptographic keys inside a hardened, tamper-resistant device.

TPM and HSM are both valuable security components in the realm of cybersecurity, but they serve different purposes and excel in distinct areas. Whereas an TPM focuses on securing the platform and ensuring system integrity, an HSM specializes in cryptographic key management and secure cryptographic operations. HSM protect keys and are used by applications in on premise, virtual, and cloud environments. They are deployed and securely configured remotely in any of these environments Also however, an HSM is expensive, difficult to upgrade and is centralized in nature. Although cloud HSM services exist, few other alternative economic choices to an HSM are available for providing a RoT cryptosystem.

In cryptographic ecosystems not using HSMs, the RoT generally resides in the system, and is likely only encrypted with a password if at all. However, that password also resides in the same system, which is a security concern. Although the ROT is encrypted on disk and accessible only for use to the application or authorized application, a plain-text version of the RoT must be copied into system memory to use the ROT and validate the chain of trust. While this presents a small crypto-threat attack surface, there is still a chance that the ROT could become compromised if the application is successfully targeted. And, running applications in system memory exposes ROT, master keys, encryption keys, and other secrets in plain text. Furthermore, the replication and copying of the same ROT is required if encryption keys are needed in other components of the cryptographic ecosystems.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

Embodiments for secure generation and exchange of Root of Trust (ROT) on a clustered cryptosystem making use of a secure enclave and multi-party secret sharing between nodes of the cluster are provided. Nodes securely receive a unique key splitter logic via a previously attested remote server. One of the nodes in the cluster generate a ROT and split it into multiple key shares and securely share it with the other nodes of the cluster; operations happen in a secure enclave of each node. Where an attacker has access to a node memory dump, they would not be able to retrieve the original ROT, and will not be compromised even if the operating system, hypervisor, or root user is compromised. This provides a security solution for an ROT even when HSM is not part of the cryptographic system.

In some embodiments, a system (100) for securely generating, and multi-party sharing of, a Root of Trust (RoT) in a clustered cryptosystem (110), the system comprising: one or more nodes (50) of a clustered cryptosystem (110) each including a secure enclave (55), wherein the secure enclave is bounded within a security perimeter of its node; and one or more Remote Servers (40) communicatively coupled to the one or more nodes (50), and respectively, one or more secure enclaves bounded therein. Each secure enclave of the one or more nodes, and in order to form a RoT cluster: attests (202) to one of the Remote Servers for joining the RoT cluster, and upon successful attestation receives a join token; and submits (204) a request that includes the join token to the one Remote Server; and receives (208) a key splitter logic from the one Remote Server responsive to the request based on the join token.

Each secure enclave of the one of more nodes amongst other nodes of the RoT cluster, upon receiving the key splitter logic: if not a primary node, sends (213) a cluster join request to the other nodes, receives cluster join requests from the other nodes; attests (215, 218) the other nodes with the one Remote Server from the join requests, and upon successful attestation joins (219) the one of more nodes into the RoT cluster If not the primary. The primary node of the one of more secure enclaves in the RoT cluster generates (220) a Root of Trust (RoT) within the one secure enclave; partitions (221) the RoT by way of a key splitter to produce multiple shared keys; and distributes (222) the multiple shared keys to each of the one or more secure enclaves in the RoT cluster, thereby replicating the RoT across all nodes of the RoT cluster. The other nodes of the one or more secure enclaves each regenerate (223) the RoT from the multiple shared keys by way of the key splitter logic thereon. In some cases, the one or more Remote Servers attest (214, 217) each secure enclave of the one or more nodes forming the form a RoT cluster.

In some embodiments, the one Remote Server obfuscates (209) the key splitter logic requested, and a different Remote Server of the one or more Remote Servers provides (211) a de-obfuscator code. Each secure enclave of the one or more nodes requests (210) the de-obfuscator code from the different Remote Server, and de-obfuscates (212) the obfuscated key splitter logic using the de-obfuscator code.

In some embodiments each secure enclave of the one or more nodes generates (201) a private and public key pair as part of a node initialization step, and that key pair provides secure communication to the one or more Remote Servers and the different Remote server over a Transport Layer Security (TLS) channel (273) for secure sending of the obfuscated key splitter logic and the de-obfuscator code.

In some embodiments, in order to join a second node of the one or more nodes: the second node sends (213) a cluster join request with its attestation information to the primary node; the primary node requests (214) the Remote Server to validate the attestation information of the second node; the Remote Server verifies (215) the attestation information of the second node and informs the primary node; the primary node sends (216) its attestation information to the second node; the second node requests (217) the Remote Server to validate the attestation information of the primary node; and the Remote Server verifies (218) the attestation information of the primary node and informs the second node. Upon such mutual verification, it joins (219) the primary node and the second node and completing a formation of the RoT cluster.

In some embodiments, the remote server receives (214, 217) requests to validate attestation information from a node responsive to that node receiving the cluster join request from another node; and responsive to validating the attestation information of the another node, sending (215, 218) a verification to the node.

In some embodiments, each secure enclave within the security perimeter of the node comprises: a processor (61) for executing security-related instruction codes; a Read Only Memory (ROM) (67) to establish a hardware root of trust from which the processor boots up; a crypto engine (63) for secure cryptographic operations including key generation and encryption; and a protected memory (62) for storing keys, and that is not accessible to an administrator or root user of the node.

In other embodiments, a method (200) for securely generating, and multi-party sharing of, a Root of Trust (RoT) in a clustered cryptosystem (110), that by way of: one or more nodes (50) of a clustered cryptosystem (110) each including a secure enclave (55), wherein the secure enclave is bounded within a security perimeter of its node; and one or more Remote Servers (40) communicatively coupled to the one or more nodes (50), and respectively, one or more secure enclaves bounded therein. By way of each secure enclave of the one or more nodes, in order to form a RoT cluster, the method includes attesting (202) to one of the Remote Servers for joining the RoT cluster, and upon successful attestation receives a join token; submitting (204) a request that includes the join token to the one Remote Server; and receiving (208) a key splitter logic from the one Remote Server responsive to the request based on the join token. Each secure enclave of the one of more nodes amongst other nodes of the RoT cluster, upon receiving the key splitter logic, perform method steps of: if not a primary node, sending (213) a cluster join request to the other nodes, receiving cluster join requests from the other nodes; attesting (215, 218) the other nodes with the one Remote Server from the join requestsupon successful attestation, if not a primary node, joining (219) the one of more nodes into the RoT cluster.

The primary node of the one of more secure enclaves in the RoT cluster performs method steps of: generating (220) a Root of Trust (RoT) within the one secure enclave; partitioning (221) the RoT by way of a key splitter to produce multiple shared keys; and distributing (222) the multiple shared keys to each of the one or more secure enclaves in the RoT cluster. This incldues replicating (223) the RoT across all nodes of the RoT cluster; and wherein other nodes of the one or more secure enclaves each perform method steps of: regenerating (223) the RoT from the multiple shared keys by way of the key splitter logic thereon. The one or more Remote Servers attest (214, 217) to each secure enclave of the one or more nodes form a RoT cluster.

In some embodiments, the one Remote Server obfuscates (209) the key splitter logic requested, and a different Remote Server of the one or more Remote Servers provides (211) a de-obfuscator code. Each secure enclave of the one or more nodes requests (210) the de-obfuscator code from the different Remote Server, and de-obfuscates (212) the obfuscated key splitter logic using the de-obfuscator code.

In some embodiments, each secure enclave of the one or more nodes generates (201) a private and public key pair as part of a node initialization step, and that key pair provides secure communication to the one or more Remote Servers and the different Remote server over a Transport Layer Security (TLS) channel (273) for secure sending of the obfuscated key splitter logic and the de-obfuscator code.

In some embodiments, in order to join a second node of the one or more nodes: the second node sends (213) a cluster join request with its attestation information to the primary node; the one primary requests (214) the Remote Server to validate the attestation information of the second node, and the Remote Server verifies (215) the attestation information of the second node and informs the primary node. The primary node sends i(216) ts attestation information to the second node, and the second node requests (217) the Remote Server to validate the attestation information of the primary node. The Remote Server verifies (218) the attestation information of the primary node and informs the second node; and, upon such mutual verification, joining (219) the primary node and the second node and completing a formation of the RoT cluster.

In some embodiments,the remote server receives (214, 217) requests to validate attestation information from a node responsive to that node receiving the cluster join request from another node; and responsive to validating the attestation information of the another node, sending (215, 218) a verification to the node.

In some embodiments, other nodes upon receiving the RoT from the primary node are delegated responsibility to share the RoT with other nodes for reducing responsibility of the primary node to share amongst all nodes of the cluster.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** depicts a system for securely generating, and multi-party sharing of, a Root of Trust (RoT) in a clustered cryptosystem in accordance with embodiments;
**FIG. 1B** shows a block diagram of a node with a secure enclave in accordance with embodiments;
**FIG. 2** illustrates a sequence diagram for the method of securely generating, and multi-party sharing of, a Root of Trust (RoT) in the clustered cryptosystem of **FIG. 1A** in accordance with embodiments;
**FIG. 3A** depicts an exemplary key signing procedure as performed by a node with a secure enclave in accordance with embodiments; and
**FIG. 3B** depicts an exemplary signature verification procedure as performed by a node with a secure enclave in accordance with embodiments.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

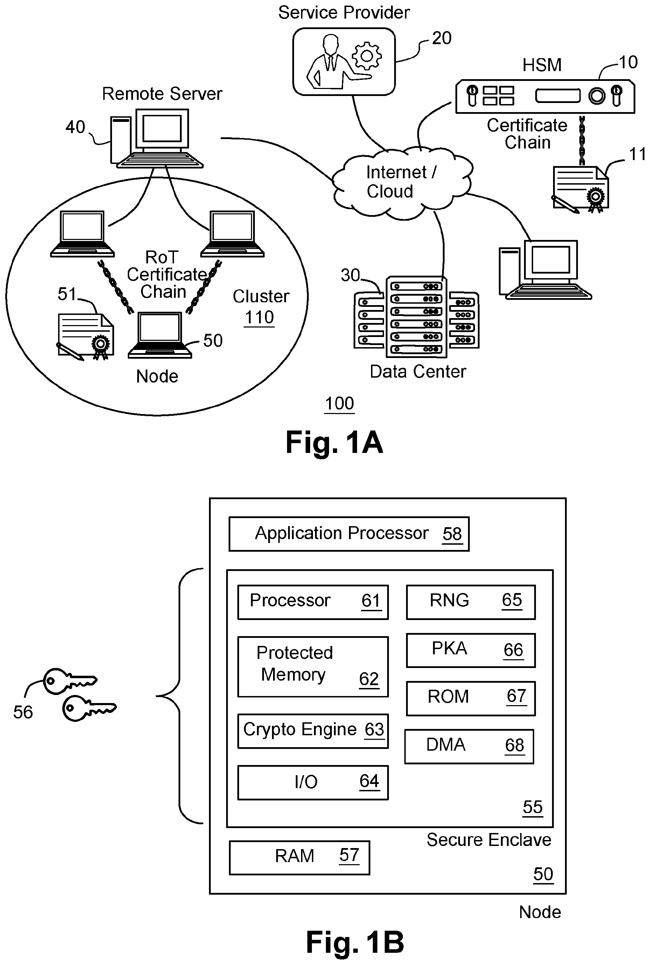

Referring to **FIG. 1A** a system **100** for securely generating, and multi-party sharing of, a Root of Trust (RoT) in a clustered cryptosystem **110** is shown. The RoT is a source that can always be trusted within a cryptographic system. Because cryptographic security is dependent on keys to encrypt and decrypt data and perform functions such as generating digital signatures and verifying signatures. RoT schemes generally include a hardened hardware module. RoT is a critical component of public key infrastructures (PKIs) to generate and protect root and certificate authority keys used for code signing to ensure software remains secure, unaltered and authentic. The RoT is one component for creating digital certificates, and used for credentialing and authenticating proprietary electronic devices for various applications, such as Internet of Things (IoT) and other network deployments.

An exemplary use and application of an RoT scheme is the hardware security module (HSM) **10,** which generates and protects keys and performs cryptographic functions within its secure environment. The HSM **10** is a dedicated crypto processing unit specifically designed for the hardware protection of the cryptographic key lifecycle. HSMs are fully contained and complete solutions for cryptographic processing, key generation, and key storage. They act as trust anchors to protect the crypto infrastructure of security-conscious organizations by securely managing, processing, and storing cryptographic keys inside a hardened, tamper-resistant device. HSM protect keys and are used by applications in on premise, virtual, and cloud environments. The HSM **10** may be provisioned and deployed within a Data Center **30,** or by way of a service provider **20** offering cloud crypto services delivering the same functionality as on-premises HSMs

The HSM **10** generally serves as the trust anchor in a certificate chain of trust (**11**, **51**) for certain entities in the system **100.** Where required, it acts to validate the identities of entities, such as the service provider **20,** the Data Center **30,** the Remote Server **40** and nodes **50** within the cluster **110,** and bind them to cryptographic keys through the issuance of electronic documents known as digital certificates. The HSM has its own certificate **11,** and issues digital certificates to authenticate content sent from servers or other cloud services. One of these certificates, the root CA (Certificate Authority) certificate corresponds to the credentials of the root CA and is stored in the HSM **10,** which the HSM will verify during its assessment along with other certificates.

In current cryptosystem environments, the nodes **50** will also have their own root certificate **51** that chain back to the HSM **10** through intermediate certificates as part of a chain of trust validation procedure. Briefly, each node **50** has a master key which encrypts all the secrets of the node, for instance, user keys, certificates and so on. This master key of the node is encrypted with a private key created in the HSM. Here, this private key is created in HSM and serves as the RoT for the node, since it encrypts the master key of the node. And, because this private key is created inside the HSM, this private key is never exposed outside the HSM, and thus, this key cannot be compromised and hence considered as a ROT for the node.

However, as noted in the background section, the HSM has its own limitations. They are very expensive, difficult to upgrade and centralized in nature. In crypto eco-system environments where an HSM is not available, or not a reasonable option, a need exists for using a same RoT where the same encryption keys are needed. This arises, for example, when high demand crypto processing is required to meet performance metrics in a timely fashion. The cluster **110** of nodes is necessary to satisfy customer demands for high availability, where each node is in effect a cryptographic functional extension of the HSM, for instance, for digital signing or signature verification. Briefly, a cluster is a group of resources that attempts to achieve a common objective and have awareness of one another within the group. Here, each HSM related container, server, or virtual server within a cluster is called a node. The clustering of nodes requires that all the data (e.g., keys, certificates, etc.) be replicated across all the nodes **50** in the cluster **110.** This replication allows end users to encrypt data on one node and decrypt the same data on other node. But, this is only possible if the nodes have the same master key because all the secrets are encrypted with this master key, hence all the nodes need the same master key for decryption. In this case RoT is typically exchanged using a secure copy and paste method for replicating the keys and certificates across nodes. But this method, including the validation process for the certificate chain of trust for all nodes in the cluster, is usually cumbersome or expensive (breaking a master key into multiple parts and sending each with a trusted courier for example) and not suitable for use on a larger scale.

Accordingly, the inventive solution here is a nodal mechanism by which all nodes are provided a same RoT to overcome then limitations described above. **FIG. 1B** depicts a node **50** with a secure enclave **55** for such purpose. The secure enclave is bounded within a security perimeter of its node. The secure enclave **55** provides hardware-level isolation and memory encryption to every node of the cluster **110,** by isolating application code and data from those with privileges, including root users and administrators with access to the application processor **58.** The application processor **58** uses the secure enclave **55** to create its own private (or master) key(s) **56,** securely store this key(s), and perform operations with the key **56.** In accordance with some embodiments of the invention, node **50** by way of the application processor **58,** securely generates the RoT in the secure enclave **55,** and then shares this RoT across all the nodes of the cluster **110.** The HSM is not used, or required, because the ROT is generated inside the built-in secure enclave **55** of the node **50.** And, since the secure enclave is not penetrable, even a rogue root or administrator cannot retrieve the ROT from within it. One may consider, the secure enclave as a mini-HSM built on the node itself.

Briefly, the secure enclave **55** is a dedicated subsystem of components isolated from the application processor to provide additional security by way of its own RoT. Components of the secure enclave **55** comprise a processor **61,** protected memory **62,** a crypto-engine **63,** Input/Output **64,** a Random Number Generator (RNG) **65,** a Public Key Accelerator (PKA) **66,** a Read-Only Memory (ROM) **67,** and Direct Memory Access (DMA) **68.** In some arrangements, a boot ROM is provided for secure boot up, which is immutable code that establishes the hardware RoT for the secure enclave. In some arrangements, the boot ROM additionally includes key splitter logic along with instructions/code for securely generating, and multi-party sharing of, a Root of Trust (RoT) as described in method **200** ahead. This logic and code are hooked in, and callable from the application processor **58** of the node **50.** In some arrangements, the key splitter logic along with instructions/code is retrieved from the Remote Server **40** and written to RAM **57** (or NAND Flash) under direction of the application processor **58.** This may occur once, or as frequently as needed to regenerate the RoT and/or store in persistent memory therein.

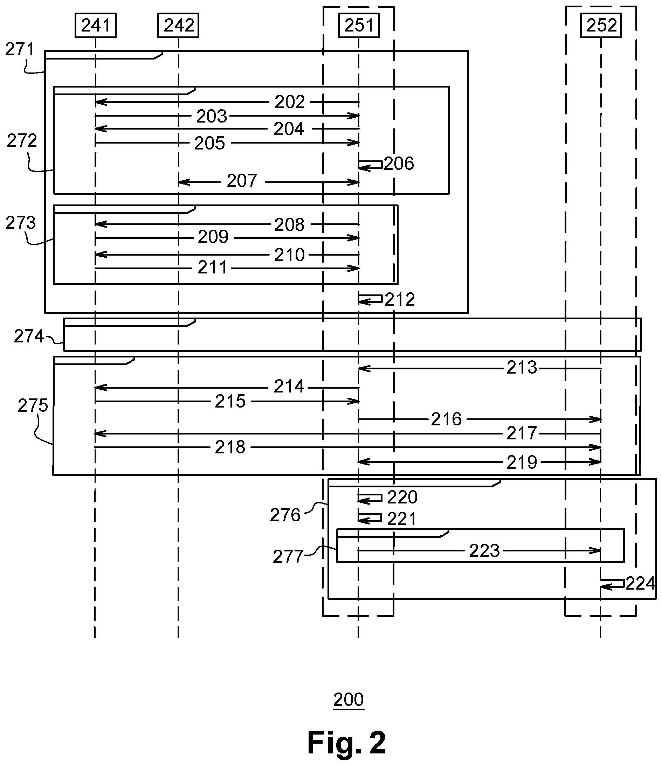

**FIG. 2** illustrates a sequence diagram for a method **200** of securely generating, and multi-party sharing of, a Root of Trust (RoT) in the clustered cryptosystem. When describing method **200,** reference will be made to components of **FIG. 1A-1B****,** for example, nodes **50** in the cluster **110,** and the Remote Server (RS) **40.** As mentioned above in **FIG. 1B****,** and as seen by the diagram swim lanes of **FIG. 2****,** certain steps **1-23** of method **200** will be executed in part, or entirely, within a secure enclave **55** of a respective node (node 1, node 2) and one or more remote servers **40** (e.g. RS 1, RS 2). The Secure Enclave comprises memory **62, 67** that includes computer instructions which when executed by the hardware processor causes the hardware processor **61** to perform the operational steps of method **200.** Similarly, node **50** comprises memory **57** that includes computer instructions which when executed by the hardware application processor **58** causes the processor **58** to perform other operational steps and any support logic of method **200.** Similarly, Remote Servers **241-242** comprise hardware memory and hardware processors for performing their respective method steps. More or less than the number of components or steps shown may be used in practice or when implemented in different embodiments when referring to the method steps.

The method **200** can start at step **201** at which point Secure Enclave 251 of Node 1 generates a key pair, for example, an RSA public key and a corresponding RSA private key. Other key types are contemplates, for example, Elliptic Curve Cryptographic (ECC) key pairs. This step may occur responsive to the node determining that higher current crypto command performance (e.g., digital signing, signature verification, etc.) is necessary to remain within contractual requirements of certain HSM host commands (e.g., # Commands Per Second (cps): A0-Generate key, A6-Export a key, AC-Translate a key, etc.), and thus creating a cluster will more quickly overcome the encumbering limitations of otherwise required for copying the RoT as previously described.

Briefly, steps 202-207 are associated with secure enclave attestation 272. At step 202, the Secure Enclave 251 attests to the Remote Server 241, for example, by way of an attestation statement or certificate. Broadly speaking, attestation is a process whereby a third-party recognizes the secure enclaves validity; namely, for proving to a remote party that node 1 software is proper and trustworthy. Here, attestation is the mechanism for the Secure Enclave 251 to prove its identity to the Remote Server 1. The attestation information comprises attributes, hashes, certificates, challenge tokens, corresponding attribute names and values, and other items necessary for binding the node to a certificate issuing authority, identity provider or other entity endorsing the attestation.

At step **203** the Remote Server 241 reports back if the attestation is successful. Here, it is successful, and the Secure Enclave 251 then submits a join request at step **204.** Responsive to this request, at step **205,** the Remote Server 241 responds with a join token encrypted with the public key generated at step 201, which was included in the certificate exchange at step 202. At step **206,** the Secure Enclave 251 decrypts the join token with the private key also generated at step 201. At this juncture, Secure Enclave 251 of Node 1 has been properly attested with Remote Server 1 as shown in Node 1 initialization box 271. Similarly Node 1 will attest to Remote Server 2 (242) at step **207** using steps 201 to 206, as shown in Node 2 initialization box 272.

Briefly, steps 208-21 are associated with a secure Transport Layer Security (TLS) channel, which is created to safeguard transmission of key splitter logic, as shown by box 273. At step **208,** Secure Enclave 251, by way of the join token previously decrypted, submits a request to Remote Server 241 to get the key splitter logic. As one example of key splitting, Shamir's secret sharing is used as an efficient secret sharing algorithm for distributing private information among a group so that the secret cannot be revealed unless a quorum of the group acts together to pool their knowledge. Other key splitting algorithms are contemplated. The key splitter logic can be executable code, processor instructions, or software, for example, that runs on the processor 61 of the secure enclave 55, and stored within RAM 57 (see FIG. 2), under control of the application processor 58. In other embodiments, the key splitter logic is integrated hardware logic, for example, that is programmed during manufacture to reside within the ROM 67 (see FIG. 2), and that will run on the processor 61 of the secure enclave 55 responsive to direction from application processor 58.

At step **209,** the Remote Server 241 returns obfuscated key splitter logic. In software environments, obfuscation is the act of creating source or machine code that is difficult for humans or computers to understand. Here, the key splitter logic is obfuscated with a code that is not available to node 1 or the Remote Server 241. Accordingly, at step **210,** the Secure Enclave 251 requests the deobfuscator code from Remote Server 242, which responds with the code at step **211.** At this juncture, the Secure Enclave 251 deobfuscates the key splitter logic at step **212,** previously shared in step 208. The key splitter logic after deobfuscation may be placed in node 1 system memory, for example, RAM 57 (see FIG. 2), or may be allocated to persistent memory by way of the application processor 58. In other embodiments, the deobfuscator code provides the processor 61 a directive to execute the key splitter logic already residing in ROM 67, that would otherwise be inaccessible without the code.

Similarly, all other nodes in the cluster 110 desiring to join the cluster perform these same steps. In this example, as see in the Node 2 Initialization box 274, Secure Enclave 252 of Node 2 repeats attestation steps 202-207. Here, Node 2 will be initialized like Node 1. Similarly, it will attest to Remote Servers 241 and 242.

Briefly, steps 213-219 are associated with a cluster join procedure as shown by box 275. At step **213,** Secure Enclave 252 of Node 2 sends a cluster join request with attestation information to Secure Enclave 251 of Node 1, which then requests validation of Node 2 from the attestation information provided, also submitted with the request at step **214.** The Remote Server 241 verifies the attestation information for node 2, and replies to Secure Enclave 251 of Node 1 at step **215** if the attestation was successful. This concludes the attestation of Node 2 by Node 1. Similarly, next, Node 2 will validate node 1. Here, At step **216** Secure Enclave 251 sends its attestation information to Secure Enclave 252, for Node 2 to verify. Briefly, mode 1 is the primary node of the cluster and so, does not need to send a cluster join request to Node 2. The primary node is the one that generates the ROT and that will share the RoT with other nodes of the cluster. In some arrangements, other nodes upon receiving the RoT from the primary node are delegated responsibility to share the RoT with other nodes; thereby reducing responsibility of the primary node to share amongst all nodes of the cluster. At step **217,** Secure Enclave 252 submits a request, with Node 1 attestation information, to validate the attestation information of Node 1. At step **218,** Remote Server 241 verifies the attestation information of Node 1 and replies to Secure Enclave 252 if the attestation of Node 1 was successful. This concludes the attestation of Node 1 by Node 2. In this example, only two nodes of the cluster have been joined (Node 1 and Node 2). This same process can be repeated for other nodes desiring to join the cluster.

Briefly, steps 220-223 are associated with generation of a master key and sharing of the master key components to other nodes in the cluster as shown by box 276. In this example, a primary node (Node 1) will generate the RoT (or a private key) inside the secure enclave, for example, as shown in step **220,** where Secure Enclave 251 generates a random secret K. Notably, this random secret constitutes the root of trust. The primary node does not need to use an HSM because the RoT is generated inside the built-in secure enclave 55 of the node 50 (see FIG. 2). Next, at step **221,** the Secure Enclave 251 partitions the RoT by way of the key splitter logic previously described. This partitioning step creates multiple key shares K1 and K2. Here, there are 2 nodes and 2 key splits, but the number of key splits need not represent the number of nodes in the cluster. Both can vary and may also depend on the key splitter logic used, with an indication input for the desired number of split keys to produce.

The Secure Enclave 251 then shares the key splits to the secure enclaves of the other nodes, for example, at step **222,** where node 1 shares K1 and K2 with node 2. The sharing is performed over a secure TLS channel, for example, set-up and created from session keys generated by and between Node 1 and Node 2. All the sharing is done via establishment of a "secure enclave to secure enclave" communication between nodes using the secure TLS channel. Notably, the private key for the session keys are also created inside the secure enclave of the node. With Node 2 now having K1 and K2, it can regenerate the same RoT on node 1 using the key splitter logic. This is shown at step **223,** where Secure Enclave 252 generates the original RoT from K1 and K2 and the key splitter logic. Recall, each node has already received the same key splitter logic at this point. Thus, in this manner, every node of the cluster 110 has the capability to re-create the same RoT as the others. The method 200 concludes with this final step.

Notably, method 200 is scalable to any number of nodes in the cluster. For example, if a new node (e.g., node 3) wants to join the existing cluster, then this node 3 repeats the steps from 201 to 219 steps, which include steps of node initialization 271, secure enclave attestation 272, getting obfuscated key splitter logic over the secure TLS channel 273, and sending cluster join request to the existing nodes in the cluster in box 275. In this case, where an addtitional node is joined, any existing node will re-divide the RoT it has. For example, the RoT will be divided into three parts K1, K2 and K3, and the parts of the RoTs are again shared to all nodes of the cluster. The receiving nodes of the cluster will re-create the original RoT. Hence in the ends all the nodes of the cluster will have the same RoT. In some cases, the additional node added will become the primary node, and in other cases, the primary node will lead and remain the primary node.

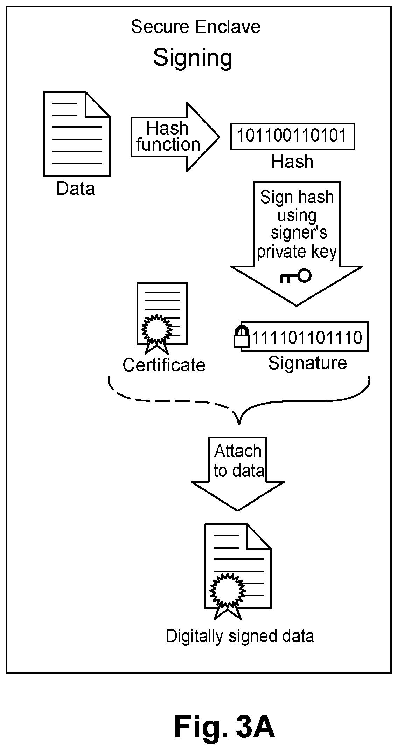

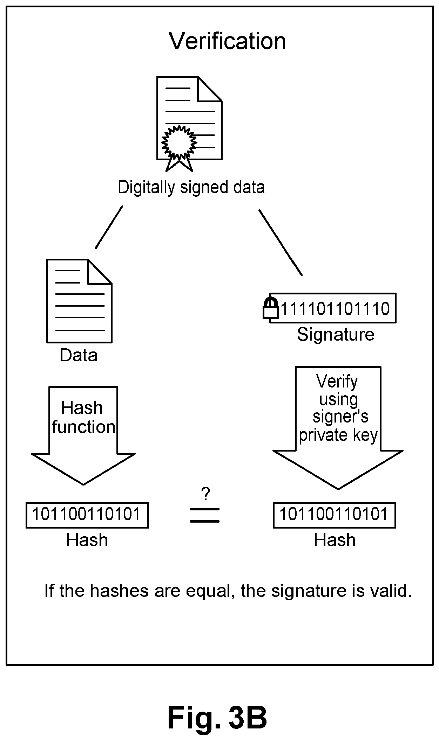

Embodiments of the invention as shown and described in FIGS 1A, 1B and 2 solve the problem of how to manage and maintain crypto demand and performance on multiple nodes **50** in a cluster **110** within a cryptosystem environment **100** without an HSM. The method **200** of secure generation and exchange of Root of Trust (ROT) on a clustered cryptosystem leverages use of the secure enclave and multi-party secret sharing between nodes of the cluster for such purpose. **FIGS. 3A** and **3B** provide a depiction of an exemplary key signing and an exemplary key verification procedure in accordance with some embodiments. This is a common activity for an HSM, but depending on demand, as previously mentioned, one HSM may be insufficient to meet performance requirements. Here, the cluster 110 of nodes 50 as shown in FIG. 1 provides load balancing of the cryptographic demand for key signing and signature verification otherwise placed on an HSM, or group of HSMs. And here, the nodes do not need the HSM for key management, key use, or key storage, or any other key related activities, let alone, a need to chain back certificates to the HSM. The nodes 50, by way of the secure enclave 55, key splitter logic, and method 200, together perform all necessary key related functions to satisfy the demand.

As shown in **FIG. 3A****,** key signing starts with applying a hash function to data, thereby producing a hash (e.g., 101100110101). This hash is then signed using the signer's private key. Here the signer can be any of the nodes **50** in the cluster, because each node has the same RoT, and the private key is either the one stored in the Secure Enclave 251 memory, or another key derived from that private key. The key signing process can reference a certificate during the procedure. Here again, the chaining need only go to the RoT on the Secure Enclave 251 and not an HSM in the network. The signer's (e.g., Secure Enclave 251) private key signs the hash (e.g., 101100110101) and then attaches the certificate to the digitally signed data. When the key is used to sign a message, the index needs to be incremented.

The certificate may be stored on the node, for example, in a key store, or provided to the node over a communication interface. As an example, a X.509 certificate uses a key pair consisting of a related public key and a private key. The public and private key pair is used to encrypt and decrypt a message, ensuring both the identity of the sender and the security of the message itself. One common use case of X.509-based PKI is Transport Layer Security (TLS)/Secure Socket Layer (SSL), which enables secure HSM communications. The certificate will include customary attributes, for example, subject, serial number, signing algorithm, and other data relevant for use with common cipher suites for securing communication.

The key verification process shown in **FIG 3B****,** is essentially the reverse of the key signing procedure. Here, the digitally signed data, is separated into its respective components: the data and the signature. The signature is verified using the signer's public key retrieved from the certificate to produce a hash. Here the verifier can be any of the nodes **50** in the cluster, because each node has the same RoT, and the private key for verification is either the one stored in the Secure Enclave 251 memory, or another key derived from that private key. Separately, the data is processed through the same hash function used for signing, to produce its own hash. These two hashes are compared, and if equal, the signature is valid it proves the signer is authentic, and the data integrity is verified. Here too, any necessary certificate use, and certificate chaining need only go to the RoT on the Secure Enclave 251 and not an HSM in the network.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor, or integrated on-chip code within static memory. Furthermore, software implementations can include, but not limited to, distributed processing or component/object distributed processing, parallel processing, or virtual machine processing can also be constructed to implement the methods described herein.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (100) for securely generating, and multi-party sharing of, a Root of Trust (RoT) in a clustered cryptosystem (110), the system comprising:
one or more nodes (50) of a clustered cryptosystem (110) each including a secure enclave (55), wherein the secure enclave is bounded within a security perimeter of its node; and
one or more Remote Servers (40) communicatively coupled to the one or more nodes (50), and respectively, one or more secure enclaves bounded therein,
**characterized in that**:
each secure enclave of the one or more nodes, in order to form a RoT cluster:
attests (202) to one of the Remote Servers for joining the RoT cluster, and upon successful attestation receives a join token; and
submits (204) a request that includes the join token to the one Remote Server;
receives (208) a key splitter logic from the one Remote Server responsive to the request based on the join token;
wherein each secure enclave of the one of more nodes amongst other nodes of the RoT cluster, upon receiving the key splitter logic:
if not a primary node, sends (213) a cluster join request to the other nodes, receives cluster join requests from the other nodes;
attests (215, 218) the other nodes with the one Remote Server from the join requests, and upon successful attestation,
if not the primary node, joins (219) the one of more nodes into the RoT cluster;
wherein the primary node of the one of more secure enclaves in the RoT cluster:
generates (220) a Root of Trust (RoT) within the one secure enclave;
partitions (221) the RoT by way of a key splitter to produce multiple shared keys;
distributes (222) the multiple shared keys to each of the one or more secure enclaves in the RoT cluster, thereby replicating the RoT across all nodes of the RoT cluster; and
wherein other nodes of the one or more secure enclaves each:
regenerate (223) the RoT from the multiple shared keys by way of the key splitter logic thereon.

2. The system of claim 1, wherein the one or more Remote Servers attest (214, 217) each secure enclave of the one or more nodes forming the form a RoT cluster.

3. The system of claim 2, wherein
the one Remote Server obfuscates (209) the key splitter logic requested;
a different Remote Server of the one or more Remote Servers provides (211) a de-obfuscator code; and
each secure enclave of the one or more nodes:
requests (210) the de-obfuscator code from the different Remote Server; and
de-obfuscates (212) the obfuscated key splitter logic using the de-obfuscator code.

4. The system of claim 3, wherein each secure enclave of the one or more nodes generates (201) a private and public key pair as part of a node initialization step, and that key pair provides secure communication to the one or more Remote Servers and the different Remote server over a Transport Layer Security (TLS) channel (273) for secure sending of the obfuscated key splitter logic and the de-obfuscator code.

5. The system of claim 1, wherein to join a second node of the one or more nodes:
the second node sends (213) a cluster join request with its attestation information to the primary node;
the primary node requests (214) the Remote Server to validate the attestation information of the second node;
the Remote Server verifies (215) the attestation information of the second node and informs the primary node;
the primary node sends (216) its attestation information to the second node;
the second node requests (217) the Remote Server to validate the attestation information of the primary node; and
the Remote Server verifies (218) the attestation information of the primary node and informs the second node; and,
upon such mutual verification, joining (219) the primary node and the second node and completing a formation of the RoT cluster.

6. The system of claim 1, wherein the remote server
receives (214, 217) requests to validate attestation information from a node responsive to that node receiving the cluster join request from another node; and
responsive to validating the attestation information of the another node, sending (215, 218) a verification to the node.

7. The system of claim 1, wherein each secure enclave within the security perimeter of the node comprises:
a processor (61) for executing security-related instruction codes;
a Read Only Memory (ROM) (67) to establish a hardware root of trust from which the processor boots up;
a crypto engine (63) for secure cryptographic operations including key generation and encryption; and
a protected memory (62) for storing keys, and that is not accessible to an administrator or root user of the node.

8. A method (200) for securely generating, and multi-party sharing of, a Root of Trust (RoT) in a clustered cryptosystem (110), that by way of:
one or more nodes (50) of a clustered cryptosystem (110) each including a secure enclave (55), wherein the secure enclave is bounded within a security perimeter of its node; and
one or more Remote Servers (40) communicatively coupled to the one or more nodes (50), and respectively, one or more secure enclaves bounded therein,
is **characterized in that**, the method comprises the steps of:
by way of each secure enclave of the one or more nodes, in order to form a RoT cluster,
attesting (202) to one of the Remote Servers for joining the RoT cluster, and upon successful attestation receives a join token; and
submitting (204) a request that includes the join token to the one Remote Server; and
receivine (208) a key splitter logic from the one Remote Server responsive to the request based on the join token;
wherein each secure enclave of the one of more nodes amongst other nodes of the RoT cluster, upon receiving the key splitter logic, perform method steps of:
if not a primary node, sending (213) a cluster join request to the other nodes, receives cluster join requests from the other nodes;
attesting (215, 218) the other nodes with the one Remote Server from the join requests, and upon successful attestation,
if not a primary node, joining (219) the one of more nodes into the RoT cluster;
wherein the primary node of the one of more secure enclaves in the RoT cluster performs method steps of:
generating (220) a Root of Trust (RoT) within the one secure enclave;
partitioning (221) the RoT by way of a key splitter to produce multiple shared keys; and
distributing (222) the multiple shared keys to each of the one or more secure enclaves in the RoT cluster, thereby
replicating (223) the RoT across all nodes of the RoT cluster; and
wherein other nodes of the one or more secure enclaves each perform method steps of:
regenerating (223) the RoT from the multiple shared keys by way of the key splitter logic thereon.

9. The method of claim 8, wherein the one or more Remote Servers attest (214, 217) to each secure enclave of the one or more nodes form a RoT cluster.

10. The method of claim 9, wherein
the one Remote Server obfuscates (209) the key splitter logic requested, and
a different Remote Server of the one or more Remote Servers provides (211) a de-obfuscator code; wherein
each secure enclave of the one or more nodes:
requests (210) the de-obfuscator code from the different Remote Server; and
de-obfuscates (212) the obfuscated key splitter logic using the de-obfuscator code.

11. The method of claim 8, wherein each secure enclave of the one or more nodes generates (201) a private and public key pair as part of a node initialization step, and that key pair provides secure communication to the one or more Remote Servers and the different Remote server over a Transport Layer Security (TLS) channel (273) for secure sending of the obfuscated key splitter logic and the de-obfuscator code.

12. The method of claim 8, wherein to join a second node of the one or more nodes:
the second node sends (213) a cluster join request with its attestation information to the primary node;
the one primary requests (214) the Remote Server to validate the attestation information of the second node;
the Remote Server verifies (215) the attestation information of the second node and informs the primary node;
the primary node sends i(216) ts attestation information to the second node;
the second node requests (217) the Remote Server to validate the attestation information of the primary node; and
the Remote Server verifies (218) the attestation information of the primary node and informs the second node; and,
upon such mutual verification, joining (219) the primary node and the second node and completing a formation of the RoT cluster.

13. The method of claim 8, wherein the remote server
receives (214, 217) requests to validate attestation information from a node responsive to that node receiving the cluster join request from another node; and
responsive to validating the attestation information of the another node, sending (215, 218) a verification to the node.

14. The method of claim 8, wherein other nodes upon receiving the RoT from the primary node are delegated responsibility to share the RoT with other nodes for reducing responsibility of the primary node to share amongst all nodes of the cluster.
